**Europäisches Patentamt**

**European Patent Office**

**Office européen des brevets**

(11) Publication number: **0 150 563**
**B1**

(12) **EUROPEAN PATENT SPECIFICATION**

(45) Date of publication of patent specification: **17.05.89**

(51) Int. Cl.⁴: **G 02 F 1/35**

(21) Application number: **84307069.9**

(22) Date of filing: **16.10.84**

(54) Optical elements.

(30) Priority: **16.12.83 GB 8333609**

(43) Date of publication of application:
**07.08.85 Bulletin 85/32**

(45) Publication of the grant of the patent:
**17.05.89 Bulletin 89/20**

(84) Designated Contracting States:
**AT BE CH DE FR IT LI LU NL SE**

(56) References cited:

APPLIED OPTICS, vol. 20, no. 8, April 1981; J.M. DZIEDZIC et al. "Optical Kerr effect in long fibers", pages 1403-1406

APPLIED OPTICS, vol. 22, no. 23, December 1983; A. SAISSY et al. "Effet Kerr optique dans une fibre optique biréfringente multimode", pages 3869-3873

(73) Proprietor: **STC PLC**
**10, Maltravers Street**
**London, WC2R 3HA (GB)**

(72) Inventor: **Byron, Kevin Christopher**
**8, Jervis Road**
**Bishops Stortford Hertfordshire (GB)**

(74) Representative: **Dennis, Mark Charles**
**STC Patents West Road**
**Harlow Essex CM20 2SH (GB)**

(56) References cited:
IEEE TRANSACTIONS ON MICROWAVE THEORY AND TECHNIQUES, vol. MTT-30, no. 4, 1982, New York, USA; Y. OHMORI et al. "Two-wave sum-frequency light generation in optical fibers", pages 604-608

OPTICS LETTERS, vol. 8, no. 3, March 1983, New York, USA; J.M. GABRIAGUES "Third-harmonic and three-wave sum-frequency light generation in an elliptical-core optical fiber", pages 183-185

Courier Press, Leamington Spa, England.

## Description

This invention relates to optical elements and optical switches and in particular to optical logic gates.

It has already been proposed that an optical switch may be configured simply by disposing a block of electro-optic material in a gap between two fibre ends. In dependence on the electric field applied to the electro-optic material the transparency of the material varies and thus an optical signal transmitted into one fibre may, in the extremes, be received or not received by the other fibre, that is the optical signal may be switched on or off.

The document "Applied Optics" 20 (1981) pages 1403—1406 refers to the optical Kerr effect and its potential in providing a fast optical shutter (switch) for picosecond optical pulses in optical fibres. The use of polarisation maintaining (birefringent) optical fibre when long fibres are involved, in view of group-velocity dispersion delays, is also referred to.

According to one aspect of the present invention there is provided an optical logic gate as defined in Claim 1.

According to another aspect of the present invention there is provided an optical AND gate comprising two optical switches in series, each switch comprising a respective length of polarisation-maintaining optical fibre and means for launching a respective pump signal thereinto whereby to induce birefringence in the respective fibre by the Kerr effect, the amount of induced birefringence varying with the respective pump signal intensity, wherein in use a polarised signal launched into the first fibre of the series is affected in dependence on the induced birefringence therein and if transmitted therefrom is launched into the second fibre of the series, a first respective pump signal intensity corresponding to transmission of the polarised signal through the respective fibre and a second respective pump signal intensity corresponding to non-transmission of the polarised signal through the respective fibre, transmission of the polarised signal through the second fibre indicating the "on" state of both switches.

According to a preferred embodiment of the present invention there is provided an optical AND gate as claimed in claim 3 wherein the optical fibres are of such a length, and the wavelength of the polarised signal corresponds to one or more Stokes shifts from the wavelengths of the pump signals, that when transmitted the polarised signal is also amplified.

Switching of an optical signal in a single fibre element may be achieved by optically inducing the optical Kerr effect therein.

Whereas, in general, optical fibres are such as to cause the plane of polarisation of an optical signal to rotate, there are optical fibres which are such as to maintain the plane of polarisation of an optical signal launched thereinto, for example fibre with an elliptical core configuration. If in addition to a polarised signal with a wavelength $\lambda_s$ launched into a length of polarisation maintaining fibre, another signal (pump signal) with a wavelength $\lambda_p$ is also launched into the length of fibre, and the intensity of the pump signal is varied, the amount of induced birefringence will be correspondingly varied. Thus the polarised signal will vary in transmission in accordance with the effect of the induced birefringence, and in the extremes will be fully on or off, that is switched on or off.

As discussed in our co-pending UK Application No. 8333610 (Publication No. 2151868A) K. C. Byron-5) and No. 8333611 (Publication No. 2151869A) (K. C. Byron-6) in dependence on the pump signal power and the separation of the wavelengths of the signals $\lambda_s$ and $\lambda_p$, optical amplification of the signal of wavelength $\lambda_s$ is possible in an amplifier fibre, of suitable design with regard to length, loss and material, by virtue of stimulated Raman emission. This requires the wavelength $\lambda_s$ to correspond to one, or more, Stokes shift from the wavelength $\lambda_p$. Thus there may be provided an optical element in which switching is achieved by optically inducing the optical Kerr effect and in which amplification can be achieved by stimulated Raman emission when the element is switched on.

Optical logic elements may be formed from simple on-off optical switches as described above. For example an AND gate may be comprised of two such switches in series, each with a respective pump signal, such that an optical signal launched into a first of the two switches will only be transmitted from the second of the two switches if the respective pump signal intensities are both such as to render the respective switches to the "on" condition.

## Claims

1. An optical logic gate comprising an optical element including a length of polarisation maintaining optical fibre and means for launching thereinto a first optical signal which is such as induce birefringence in the fibre by the optical Kerr effect, the amount of birefringence varying with the signal intensity and being such as to cause a corresponding rotation in the polarisation of a second optical signal input to the fibre, which second optical signal is polarised, the output of the element corresponding to "on" (logical 1) or "off" (logical 0).

2. An optical AND gate comprising two optical switches in series, each switch comprising a respective length of polarisation-maintaining optical fibre, a polariser and means for launching a respective optical pump signal into the optical fibre whereby to induce birefringence in the respective fibre by the optical Kerr effect, the amount of induced birefringence varying with the respective pump signal intensity, and means for launching a polarised optical signal into the first fibre of the series, the transmission of which polarised signal is affected in dependence on the induced birefringence therein, said polarised signal, if transmitted therethrough, being launched into the second fibre, a first intensity of each respective pump signal corresponding to transmission of the polarised signal through the respective fibre and a second intensity of each respective pump signal corresponding to non-transmission of the polarised signal through the respective fibre, the existence of the transmitted polarised signal at the exit of the second switch indicating the "on" state of both switches.

3. An optical AND gate as claimed in claim 2 wherein the optical fibres are of such a length, and the wavelength of the polarised signal corresponds to one or more Stokes shifts from the wavelengths of the pump signals, that when transmitted the polarised signal is also amplified.

**Patentansprüche**

1. Optisches logisches Verknüpfungsglied mit einem optischen Element, das eine Länge einer eine Polarisation aufrechterhaltenden Faser und Einrichtungen zum Einleiten eines ersten optischen Signals in diese optischen Faser einschließt, das derart ist, daß eine Doppelbrechung in der Faser aufgrund des optischen Kerr-Effektes hervorgerufen wird, wobei die Größe der Doppelbrechung sich mit der Signalintensität ändert und derart ist, daß eine entsprechende Drehung der Polarisation eines zweiten optischen Signals hervorgerufen wird, das in die Faser eingeleitet wird, wobei das zweite optische Signal polarisiert ist und der Ausgang des Elementes einem 'EIN'- (logische 1) oder 'AUS'-Zustand (logische 0) entspricht.

2. Optisches UND-Verknüpfungsglied mit zwei in Reihe angeordneten Schaltern, wobei jeder Schalter eine jeweilige Länge einer eine Polarisation aufrecht erhaltenden optischen Faser, einen Polarisator und Einrichtungen zur Einleitung eines jeweiligen optischen Pumpsignals in die optische Faser derart umfaßt, daß eine Doppelbrechung in der jeweiligen Faser durch den optischen Kerr-Effekt hervorgerufen wird, wobei die Größe der hervorgerufenen Doppelbrechung sich mit der Intensität des jeweiligen Pumpsignals ändert, und mit Einrichtungen zur Einleitung eines polarisierten optischen Signals in die erste Faser der Reihe, wobei die Übertragung dieses polarisierten Signals in Abhängigkeit von der in der Faser hervorgerufenen Doppelbrechung beeinflußt ist und das polarisierte Signal im Fall einer Übertragung in die zweite Faser eingeleitet wird, und wobei eine erste Intensität jedes jeweiligen Pumpsignals der Übertragung des polarisierten Signals durch die jeweilige Faser und eine zweite Intensität jedes jeweiligen Pumpsignals der Nichtübertragung des polarisierten Signals durch die jeweilige Faser entspricht, und das Vorhandensein des übertragenen polarisierten Signals am Ausgang des zweiten Schalters den 'EIN'-Zustand beider Schalter anzeigt.

3. Optisches UND-Verknüpfungsglied nach Anspruch 2, dadurch gekennzeichnet, daß die optischen Fasern eine derartige Länge aufweisen und die Wellenlänge des polarisierten Signals einer oder mehreren Stokes-Verschiebungen gegenüber den Wellenlängen des Pumpsignals derart entspricht, daß das polarisierte Signal bei seiner Übertragung außerdem verstärkt wird.

**Revendications**

1. Porte logique optique comprenant un élément optique qui comporte un tronçon d'une fibre optique conservant la polarisation et un dispositif de lancement dans la fibre d'un premier signal optique qui est tel qu'il induit une biréfringence dans la fibre par effet Kerr optique, l'amplitude de la biréfringence variant avec l'intensité du signal et étant telle qu'elle provoque une rotation correspondante de la polarisation d'un second signal optique transmis à la fibre, le second signal optique étant polarisé, le signal de sortie de l'élément correspondant à la fermeture (état logique 1) ou à l'ouverture (état logique 0).

2. Porte ET optique comprenant deux commutateurs optiques montés en série, chaque commutateur comprenant un tronçon respectif d'une fibre optique conservant la polarisation, un polariseur et un dispositif destiné à lancer un signal respectif de pompage optique dans la fibre optique afin qu'une biréfringence soit induite dans la fibre respective par effet Kerr optique, l'amplitude de la biréfringence induite variant avec l'intensité du signal respectif de pompage, et un dispositif de lancement d'un signal optique polarisé dans la première fibre de la série, la transmission du signal polarisé étant affectée en fonction de la biréfringence qui y est induite, le signal polarisé, lorsqu'il est transmis, étant lancé dans la seconde fibre, une première intensité de chacun des signaux respectifs de pompage correspondant à la transmission du signal polarisé dans la fibre respective et une seconde intensité de chaque signal respectif de pompage correspondant à l'absence de transmission du signal polarisé dans la fibre respective, l'existence du signal polarisé transmis à la sortie du second commutateur indiquant l'état de fermeture des deux commutateurs.

3. Porte ET optique selon la revendication 2, dans laquelle les fibres optiques ont une longueur telle et la longueur d'onde du signal polarisé correspond à un ou plusieurs déplacements de Stokes par rapport à la longueur d'onde des signaux de pompage d'une manière telle que, lorsqu'il est transmis, le signal polarisé est aussi amplifié.